# EUROPÄISCHE PATENTSCHRIFT

(11) **EP 1 575 739 B1**
(45) Veröffentlichungstag und Bekanntmachung des Hinweises auf die Patenterteilung: **27.09.2006**
(21) Anmeldenummer: 03785719.0
(22) Anmeldetag: 03.12.2003
(51) Int. Cl.: B23Q 17/22, B23Q 3/18, B24B 41/06, B23B 31/02

(54) **VORRICHTUNG UND VERFAHREN ZUM ZENTRIERTEN SPANNEN VON ROTIEREND ANTREIBBAREN TEILEN**
DEVICE AND METHOD FOR CENTRALLY TIGHTENING ROTATINGLY DRIVABLE PARTS
DISPOSITIF ET PROCEDE DE SERRAGE CENTRE DE PIECES DESTINEES A ETRE ENTRAINEES PAR ROTATION

(30) Priorität: 11.12.2002 DE 10259257
(43) Veröffentlichungstag der Anmeldung: 21.09.2005
(73) Patentinhaber: Marquart, Ingeborg, 78351 Bodman (DE)
(72) Erfinder: MARQUART, Uwe, 78351 Bodman (DE)
(74) Vertreter: Gahlert, Stefan
(86) Internationale Anmeldenummer: PCT/EP2003/013617
(87) Internationale Veröffentlichungsnummer: WO 2004/052592

(56) Entgegenhaltungen:
- WO-A-00/13069
- US-A- 3 544 117
- US-A- 5 427 484

## Beschreibung

Die Erfindung betrifft eine Vorrichtung und ein Verfahren zum zentrierten Spannen von rotierend antreibbaren Teilen (siehe, z.B., US-3 544 117-A).

In der Fertigungstechnik müssen zahlreiche Teile in mehreren Bearbeitungsvorgängen nacheinander bearbeitet werden. So ist z.B. bei der Herstellung von Fräswerkzeugen möglicherweise erst ein Dreh- oder Schleifvorgang notwendig, woraufhin anschließend Nuten eingefräst werden müssen. Hierbei ist es erwünscht, dass die Nuten korrekt bezüglich der Längsachse des betreffenden Fräswerkzeuges ausgerichtet sind.

Das zentrierte Einspannen eines solchen Teils stellt immer ein Problem dar. Hierbei wird meist versucht, manuell eine Justierung des eingespannten Teils zur Erreichung eines korrekten Rundlaufs durchzuführen, indem z.B. Korrekturen mittels Hammerschlägen oder in ähnlicher Weise vorgenommen werden.

Des weiteren ist es insbesondere bei Fräswerkzeugen mit hohen Spindeldrehzahlen erwünscht, die betreffenden Fräswerkzeuge zentriert einzuspannen, so dass sich ein korrekter Rundlauf ergibt. Hierzu ist es zwar bekannt, auch sehr kleine Werkzeuge z.B. mittels eines Schrumpfspannfutters mit hoher Kraft und hoher Genauigkeit einzuspannen, jedoch können wiederum Spannfehler beim Einspannen des Schrumpfspannfutters etwa an der Frässpindel auftreten.

Vor diesem Hintergrund besteht die Aufgabe der Erfindung darin, eine Vorrichtung und ein Verfahren zum zentrierten Spannen von rotierend antreibbaren Teilen zu schaffen, womit auf möglichst einfache Weise eine möglichst genaue Ausrichtung des gespannten Teils bezüglich des Rundlaufs ermöglicht wird.

Diese Aufgabe wird erfindungsgemäß durch eine Vorrichtung nach Anspruch 1 gelöst.

Hinsichtlich des Verfahrens wird diese Aufgabe ferner durch ein Verfahren nach Anspruch 16 gelöst.

Die Aufgabe der Erfindung wird auf diese Weise vollkommen gelöst.

Erfindungsgemäß wird es nämlich nunmehr ermöglicht, an einem bereits eingespannten Teil mittels einer Messeinrichtung die Rundlaufabweichungen zu erfassen und in Stellgrößen umzusetzen, um die die Justiereinrichtungen definiert verstellt werden müssen, um einen korrekten Rundlauf zu erhalten.

Vorzugsweise weist hierzu die Spann- und Justiereinrichtung einen ersten Satz von drei Einheiten zum Spannen und Justieren auf, sowie einen zweiten Satz von Einheiten zum Spannen und Justieren auf, der gegenüber dem ersten Satz von Einheiten in Axialrichtung versetzt angeordnet ist. Auf diese Weise wird es ermöglicht, ein eingespanntes Teil sowohl bezüglich eines Taumelschlages als auch bezüglich eines Parallelschlages korrekt auf einen Rundlauf zu justieren.

Vorzugsweise weist hierbei jeder Satz von Einheiten jeweils zwei mit Stelleinrichtungen versehene Justiereinheiten sowie eine Spanneinheit auf, wobei die Einheiten in gleichmäßigen Winkelabständen zueinander versetzt angeordnet sind.

Während die Spanneinheit lediglich als Widerlager beim Spannen bzw. Justieren dient, erfolgt die eigentliche Justierung hierbei mittels der Justiereinheiten.

Hierbei weisen die Justiereinheiten vorzugsweise radial verstellbare Stößel auf, während die Spanneinheiten vorzugsweise radial spannbare Stößel aufweisen.

Somit ist das zu spannende Teil zwischen zwei Sätzen von jeweils drei Spannpunkten in zwei axial gegeneinander versetzten Ebenen aufgenommen, womit sich eine besonders einfache Justierung bezüglich eines Taumelschlages und eines Parallelschlages ergibt.

Hierbei weisen die Justiereinheiten vorzugsweise mittels Stellschrauben oder eines Stellantriebs radial verstellbare Stößel auf. Somit können die Stößel der Justiereinheiten formschlüssig auf die Sollposition gebracht werden. Dagegen wird die Spannkraft an den Spanneinheiten vorzugsweise über Spannfedern aufgebracht, so dass die Spanneinheiten nachgeben können, sofern mittels der verstellbaren Stößel der Justiereinheiten Lageveränderungen vorgenommen werden müssen.

In vorteilhafter Weiterbildung der Erfindung weisen die Stelleinrichtungen eine Untersetzung auf.

Durch eine derartige Maßnahme wird eine besonders feinfühlige Einstellung zur Erreichung eines korrekten Rundlaufes ermöglicht.

Hierzu kann jede Stelleinrichtung bspw. ein Differentialgewinde mit zwei Gewinden mit unterschiedlicher Steigung aufweisen, deren Wegdifferenz in einen Stellweg zur radialen Verstellung umgesetzt wird.

Dies ermöglicht eine besonders genaue und feinfühlige Verstellung, so dass bspw. eine definierte Winkelverdrehung einer Justiereinheit mittels einer Stellschraube oder eines Stellantriebs in einen sehr geringen radialen Stellweg umgesetzt werden kann.

Hierbei wirkt vorzugsweise das zweite, vom ersten Gewinde angetriebene, Gewinde über einen Stellkonus mit einer Konusaußenfläche auf eine Mehrzahl von Kugeln, die ferner an einer feststehenden Konusinnenfläche geführt sind, wobei die Kugeln auf den Stößel wirken, um durch eine seitliche Ausweichbewegung entlang der beiden Konusflächen eine weitere Untersetzung einer Verstellbewegung der Stelleinrichtung zu bewirken.

Durch diese Maßnahme wird durch die weitere Untersetzung eine noch feinfühligere Justierung ermöglicht, wobei gleichzeitig durch die Kugelübertragung auf den Stößel eine Ausrichtung auf die Stößelachse sichergestellt werden kann, so dass Kippfehler vermieden werden.

Hierbei wirken die Kugeln vorzugsweise auf einen Flansch, an dem der Stößel ausgebildet ist.

Ferner ist hierbei vorzugsweise der Flansch durch mindestens ein erstes Federelement in Radialrichtung nach außen gegen die Kugeln vorgespannt, wobei mindestens ein zweites Federelement vorgesehen ist, um den Stellkonus gegenüber dem Flansch in Radialrichtung nach außen vorzuspannen.

Auf diese Weise wird eine ständige Anlage des Flansches an den Kugeln gewährleistet, während gleichzeitig eine Rückstellung des Stellkonus bei einer Radialbewegung nach außen sichergestellt ist.

In weiter vorteilhafter Ausgestaltung der Erfindung weisen die Spanneinheiten radial spannbare Stößel auf, die in einer gespannten Stellung durch Spannfedern in Radialrichtung nach innen beaufschlagt sind.

Auf diese Weise wird, wie vorstehend bereits erwähnt, die notwendige Nachgiebigkeit in Radialrichtung gewährleistet, wenn die Justierelemente zur Justierung des Teils durch eine Stelleinrichtung um einen bestimmten Betrag verstellt werden.

In zusätzlicher Weiterbildung der Erfindung ist eine Spanneinrichtung zum Spannen des Teils vorgesehen, die mit einem Spannabschnitt in der Spann- und Justiereinrichtung aufgenommen ist.

Hierdurch wird eine konventionelle Spannung des zu spannenden Teils etwa in einem mechanischen Spannfutter, einem Schrumpfspannfutter oder z.B. in einer Spannzange ermöglicht, wobei diese komplett gespannte Einheit mit dem Spannabschnitt in der Spann- und Justiereinrichtung eingespannt und auf Rundlauf justiert werden kann.

Auf diese Weise können Teile mit einem weiten Durchmesserbereich in einer dazu geeigneten Spanneinrichtung aufgenommen werden, die ihrerseits in der Spann- und Justiereinrichtung auf Rundlauf justiert wird. Somit wird der Spannvorgang für das zu spannende Teil von dem Justiervorgang auf Rundlauf entkoppelt, wodurch ein und dieselbe Spann- und Justiereinrichtung zum zentrierten Spannen von verschiedenartigsten Teilen verwendet werden kann.

Auf diese Weise lässt sich eine vollständige Justierung des zu spannenden Teils auf einen Rundlauf sowohl bezüglich Parallelabweichungen als auch bezüglich Taumelabweichungen gewährleisten.

Die Recheneinrichtung ist vorzugsweise mit einer Anzeige zur optischen und/oder akustischen Anzeige der Stellgrößen gekoppelt.

Auf diese Weise kann eine manuelle Justierung des eingespannten Teils aufgrund der angezeigten Stellgrößen durchgeführt werden.

Zusätzlich oder in alternativer Ausführung der Erfindung ist die Recheneinrichtung mit automatischen Stellmitteln zur automatischen Einstellung der Justiereinheiten auf Rundlauf des gespannten Teils gekoppelt.

Auf diese Weise kann eine vollautomatische Justierung des eingespannten Teils auf korrekten Rundlauf durchgeführt werden.

Hierzu kann als automatisches Stellmittel bspw. ein Schrittmotor für jede Justiereinheit vorgesehen sein.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Ansicht einer erfindungsgemäßen Vorrichtung in stark vereinfachter Prinzipdarstellung;
- Fig. 2: eine teilweise geschnittene Längsansicht einer erfindungsgemäßen Spann- und Justiereinrichtung mit einem darin aufgenommenen Spannfutter zur Aufnahme eines Teils, und
- Fig. 3: einen vergrößerten Schnitt durch eine der Justiereinheiten gemäß Fig. 2.

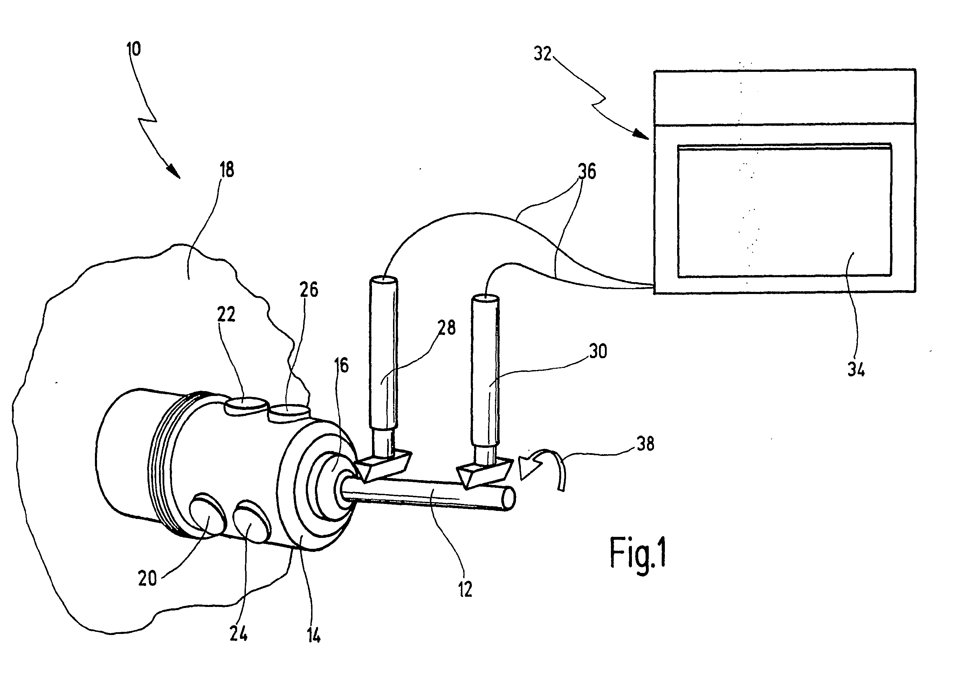

In Fig. 1 ist eine erfindungsgemäße Vorrichtung zum zentrierten Spannen eines Teils 12 insgesamt mit der Ziffer 10 bezeichnet.

Die Vorrichtung 10 weist eine allgemein mit der Ziffer 14 bezeichnete Spann- und Justiereinrichtung auf, in die ein zu spannendes Teil 12 entweder unmittelbar eingesetzt, gespannt und zentriert werden kann. Im dargestellten Fall ist das Teil 12 jedoch in einer Spanneinrichtung 16 fest eingespannt, die ihrerseits in die Spann- und Justiereinrichtung 14 eingesetzt ist und dort gespannt und auf Rundlauf justiert wird.

Bei der Spanneinrichtung 16 kann es sich um eine beliebige Spanneinrichtung handeln, z.B. ein mechanisches Spannfutter, ein Schrumpfspannfutter oder etwa um eine Spannzange.

Die Spann- und Justiereinrichtung 14 ist ihrerseits an einem Drehantrieb aufgenommen, der in Fig. 1 lediglich schematisch mit Ziffer 18 dargestellt ist. Die Spann- und Justiereinrichtung weist jeweils drei Spann- bzw. Justiereinheiten auf, die in einer Radialebene der Spann- und Justiereinrichtung 14 aufgenommen sind, wobei zwei derartiger Sätze von Justiereinheiten bzw. Spanneinheiten in Axialrichtung versetzt hintereinander angeordnet sind.

Im in Fig. 1 dargestellten Fall sind in einer Radialebene jeweils zwei Justiereinheiten 20, 22 bzw. 24, 26 aufgenommen, während die dritte Einheit in der Figur nicht erkennbar ist. Bei der jeweils zugeordneten dritten Einheit einer Radialebene handelt es sich um eine Spanneinheit, die lediglich ein Spannen, jedoch kein Justieren erlaubt, wie im folgenden noch näher erläutert wird.

Gemäß Fig. 1 sind zwei Messeinrichtungen 28, 30 vorgesehen, um bei einem rotierend angetriebenen Teil 12 (vgl. Pfeil 38) Abweichungen vom Rundlauf zu ermitteln. Um sowohl Abweichungen bezüglich eines Taumelschlages als auch eines Parallelschlages erfassen zu können, sind zwei Messeinrichtungen 28, 30 vorgesehen, die axial gegeneinander versetzt sind.

Es kann sich hierbei im einfachsten Fall um Messuhren handeln, deren Ausschlag in elektrische Signale umgesetzt wird, die über Leitungen 36 einer Recheneinrichtung 32 zugeführt werden.

Es versteht sich, dass natürlich beliebige Messeinrichtungen 28, 30 verwendet werden können, sofern diese die geforderte Genauigkeit liefern können. So könnte es sich bspw. auch um lasergestützte Messeinrichtungen handeln.

Von der Recheneinrichtung 32 werden die von den Messeinrichtungen 28, 30 erhaltenen Signale in Stellgrößen umgerechnet, um die die Justiereinheiten 20, 22 bzw. 24, 26 in definierter Weise verstellt werden müssen, um ein eingespanntes Teil 12 korrekt auf einen Rundlauf von annähernd Null auszurichten.

Die betreffenden Signale können einer Anzeige 34 zugeführt werden, um diese optisch und/oder akustisch für eine Bedienungsperson erkennbar zu machen. Bei den von der Recheneinheit 32 an die Anzeige 34 ausgegebenen Stellgrößen kann es sich bspw. um Winkelgrade handeln, um die an den vier Justiereinheiten 20, 22 bzw. 24, 26 vorgesehene Stellschrauben im Uhrzeigersinn oder im Gegenuhrzeigersinn verdreht werden müssen, um einen korrekten Rundlauf zu erhalten.

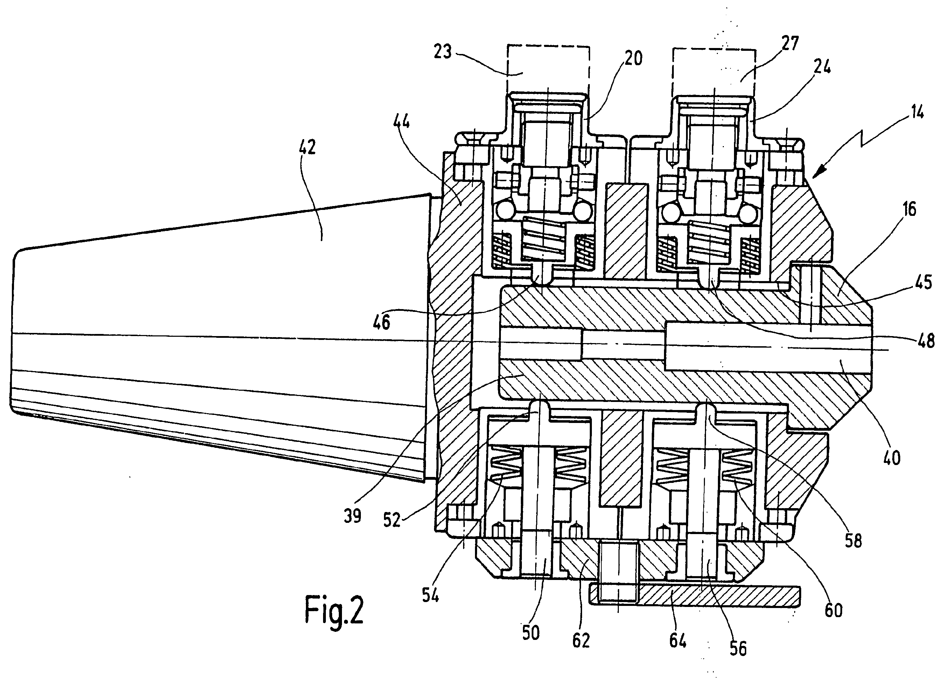

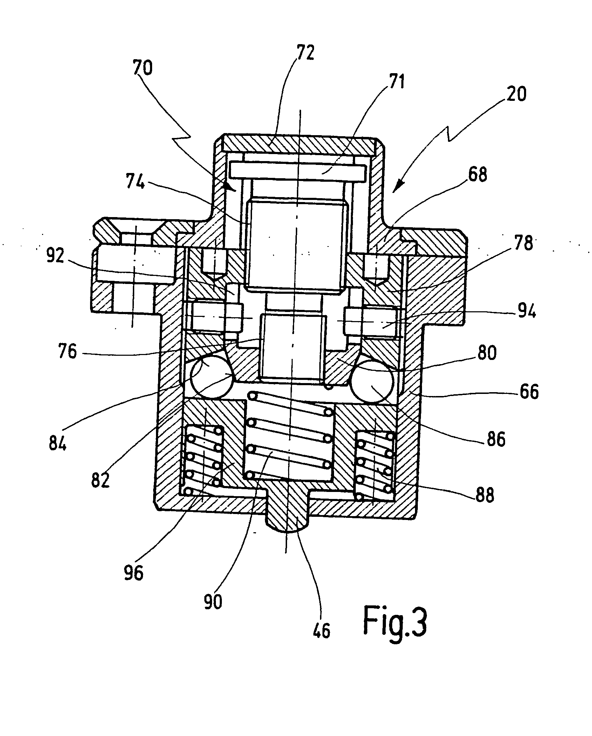

Der nähere Aufbau der erfindungsgemäßen Vorrichtung ist aus den Figuren 2 und 3 zu ersehen.

Die Spann- und Justiereinrichtung 14 weist ein Gehäuse 44 auf, in dem eine Bohrung 45 zur Aufnahme eines zu spannenden Teils oder, wie dargestellt, zum Einsetzen einer Spanneinrichtung 16 vorgesehen ist. Am der Bohrung 45 gegenüberliegenden Ende des Gehäuses 44 ist ein beliebig geartetes Anschlussteil zur Befestigung der Spann- und Justiereinrichtung 14 vorgesehen. Es kann sich bspw. um einen standardisierten Spannkegel 42 handeln (wie dargestellt).

Im Bereich der Bohrung 45 des Gehäuses 44 sind jeweils drei Spann- bzw. Justiereinheiten mit einem axialen Abstand zueinander aufgenommen.

In der Zeichenebene gemäß Fig. 2 sind axial zueinander versetzt jeweils zwei Einheiten erkennbar, während die jeweils zugehörige dritte Einheit außerhalb der Zeichenebene liegt. So ist in einer ersten Radialebene eine mit Ziffer 20 bezeichnete Justiereinheit erkennbar, sowie eine zugeordnete Spanneinheit 50. In einer zweiten, dazu axial versetzten Radialebene ist eine zweite Justiereinheit 24 erkennbar, sowie eine zugehörige Spanneinheit 56.

Die Justiereinheiten 20, 24 und auch die beiden anderen außerhalb der Zeichenebene liegenden Justiereinheiten 22, 26 sind identisch aufgebaut. Gleichermaßen sind die Spanneinheiten 50, 56 identisch aufgebaut. Die Justiereinheiten 20, 24 bzw. 22, 26 weisen Stößel 46, 48 auf, die radial in die Bohrung 45 hineinragen. In entsprechender Weise weisen die Spanneinheiten 50, 56, Stößel 52, 58 auf, die gleichermaßen radial in die Bohrung 45 hineinragen.

Insgesamt wird auf diese Weise eine Sechspunktaufnahme geschaffen, in der die Spanneinrichtung 16 mit einem Spannabschnitt 39 gespannt werden kann. Die beiden Justiereinheiten 20, 22 und die zugeordnete Spanneinheit 50 der ersten Radialebene, sowie die beiden Justiereinheiten 24, 26 und die zugeordnete Spanneinheit 56 der zweiten Radialebene sind um jeweils 120° winkelmäßig gegeneinander versetzt angeordnet. Zusätzlich können die Seitenflächen des hiermit zu spannenden Spannabschnittes 39 entsprechende Abflachungen aufweisen.

Während die Stößel 46, 48 der Justiereinheiten 20, 22, 24, 26 in Radialrichtung in definierter Weise verstellbar sind, können die Stößel 52, 58 der beiden Spanneinheiten 50, 56 lediglich durch Betätigen eines Spannhebels 64 gemeinsam in Radialrichtung gelöst oder gespannt werden. Hierzu sind beide Stößel 52, 58 der Spanneinheiten 50, 56 über Tellerfedern 54, 60 an einem gemeinsamen Spanngehäuse 62 abgestützt. Dabei können die beiden Stößel 52, 58 durch eine Verdrehung eines am Spanngehäuse 62 angreifenden Spannhebels 64 entweder in die in Fig. 2 gezeichnete Spannstellung gebracht werden, in der die beiden Stößel 52, 58 durch die Kraft der Tellerfedern 54 bzw. 60 radial gegen den Spannabschnitt 39 der Spanneinrichtung 16 beaufschlagt sind. Oder aber die beiden Stößel 52, 58 werden aus der Spannstellung radial nach außen in eine Lösestellung bewegt.

In Fig. 2 sind ferner noch durch gestrichelte Linien 23, bzw. 27 zwei optionale Schrittmotoren angedeutet, durch die die Justiereinheiten 20 und 24 bzw. in entsprechender Weise die Justiereinheiten 22, bzw. 26 automatisch verstellt werden könnten, sofern eine automatische Justierung des Rundlaufs erwünscht ist.

Der Aufbau der Justiereinheiten ist nachfolgend anhand von Fig. 3 näher erläutert.

Die Justiereinheit 20 weist gemäß Fig. 3 ein erstes, topfförmiges Gehäuseteil 66 auf, innerhalb dessen eine Stelleinrichtung 70 zur Verstellung des Stößels 46 vorgesehen ist, wobei die Stelleinrichtung 70 durch ein zweites Gehäuseteil 68 von außen umschlossen ist.

Die Justiereinheiten 20, 22, 24, 26 sind jeweils als Ganzes in entsprechenden Radialbohrungen des Gehäuses 44 der Spann- und Justiereinrichtung in geeigneter Weise durch Verschraubungen fixiert.

Die Stelleinrichtung 70 einer jeweiligen Justiereinheit 20 weist einen Stellbolzen 71 auf, der von außen her über eine Stellscheibe 72 verdrehbar ist. Die Stellscheibe 72 weist vorzugsweise Markierungen auf, die mit geeigneten Markierungen am Gehäuseteil 68 zusammenwirken, um eine definierte Verdrehung des Stellbolzens 71 durchführen zu können. Die Stellscheibe 72 ist mit einem Schlitz oder dergleichen versehen, um mittels eines Werkzeuges eine Justierung vornehmen zu können.

Der Stellbolzen 71 weist einen ersten Gewindeabschnitt 74 auf, der in einem zugeordneten Innengewindeabschnitt eines verdrehgesichert aufgenommenen flanschförmigen Aufnahmekörpers 78 verstellbar ist. Am der Stellscheibe 72 gegenüberliegenden Ende des Stellbolzens 71 ist ferner ein zweiter Gewindeabschnitt 76 vorgesehen, der eine geringere Steigung als der erste Gewindeabschnitt 74 aufweist. Auf diesem zweiten Gewindeabschnitt 76 ist ein Stellkonus 80 mit einem entsprechenden Innengewinde geführt, der an dem Aufnahmekörper 78 mittels seitlicher Schrauben 94, die in eine Axialführung 92 eingreifen, verdrehgesichert geführt ist. Somit führt eine Verdrehung des Stellbolzens 71 zu einer Bewegung des Stellkonus 80 in Radialrichtung der Spann- und Justiereinrichtung bzw. in Axialrichtung der Justiereinheit 20.

Der Stellkonus 80 weist eine Außenkonusfläche 82 auf, die auf eine Mehrzahl von Kugeln 86 wirkt. Diese Kugeln 86 sind zwischen der Außenkonusfläche 82, einer Innenkonusfläche 84 am Ende des Aufnahmekörpers 78 und einem Flansch 96 gehalten, an dessen der Stellscheibe 72 gegenüberliegenden Ende der Stößel 46 einstückig angeformt ist. Der Stößel 46 steht durch eine entsprechende Öffnung im Gehäuseteil 66 in die Bohrung 45 der Spann- und Justiereinrichtung 14 hervor. Die Steigungen der beiden Gewindeabschnitte 74, 76 des Stellbolzens 71 unterscheiden sich um 10 %. Demzufolge ergibt sich eine Untersetzung von 1:10, d.h., wenn der Stellbolzen z.B. um einen Betrag von 100 µm in Radialrichtung der Spann- und Justiereinrichtung 14 bewegt wird, so bewegt sich der Stellkonus nur um einen Betrag von 10 µm. Da die Kugeln 86 zwischen der Außenkonusfläche 82 des Stellkonus 80 und der Innenkonusfläche 84 des Aufnahmekörpers 78 gehalten sind, bewegen sich die Kugeln 86 bei einer Verschiebung des Stellkonus 80 zusätzlich seitlich entlang der Innenkonusfläche 84 des Aufnahmekörpers 78. Hierdurch wird eine weitere Untersetzung um einen entsprechenden Betrag erzielt, der von den betreffenden Winkelverhältnissen abhängig ist.

Insgesamt ergibt sich auf diese Weise eine starke Untersetzung, so dass eine feinfühlige Justierung der Position des Stößels 46 vorgenommen werden kann.

Der Flansch 96 ist durch insgesamt vier am ersten Gehäuseteil 66 abgestützte Druckfedern 88, die in geeigneten Bohrungen des Flansches 96 aufgenommen sind, in Richtung auf die Kugeln 86 vorgespannt, so dass der Flansch immer an der Oberfläche der Kugeln 86 anliegt. In einer zentralen Vertiefung des Flansches 96 ist ferner eine zweite Druckfeder 90 aufgenommen, die auf die Stirnfläche des Stellkonus 80 wirkt, um diesen so nach außen in Richtung der Stellscheibe 72 vorzuspannen. Diese Feder 90 dient lediglich einer Unterstützung der Rückführung des Stellkonus 80 bei einer Bewegung des Stellbolzens 71 nach außen.

Im Folgenden sei die Wirkungsweise der erfindungsgemäßen Vorrichtung 10 nochmals kurz erläutert.

Zunächst wird ein auszurichtendes Teil 12 in einer Bohrung 40 der Spanneinrichtung 16 eingespannt, was z.B. mechanisch oder durch eine Schrumpfpassung innerhalb eines Schrumpffutters erfolgen kann.

Die Justiereinheiten 20, 22, 24, 26 werden dann vorzugsweise zunächst in ihre Nullstellung zurückgesetzt und die Spanneinheiten 50, 56 durch Bewegen des Spannhebels 64 in ihre Lösestellung gebracht. In dieser Stellung kann die Spanneinrichtung 16 mit ihrem Spannabschnitt 39 in die Bohrung 45 der Spann- und Justiereinrichtung 14 eingeführt werden. Anschließend werden die Spanneinheiten 50, 56 mittels des Spannhebels 64 in ihre Spannstellung gebracht, so dass die Spanneinrichtung 16 mit ihrem Spannabschnitt 39 fest in der Spann- und Justiereinrichtung 14 eingespannt wird. Anschließend wird der Drehantrieb 18 eingeschaltet und über die beiden Messeinrichtungen 28, 30 die Abweichungen vom Rundlauf ermittelt. Von der Recheneinrichtung 32 werden nun auf Grund der gemessenen Abweichungen vom Rundlauf unter Berücksichtigung der bekannten Daten der Stelleinrichtungen die Stellgrößen für alle vier Justiereinheiten 20, 22, bzw. 24, 26 ermittelt. Es wird also für jede Justiereinheit errechnet, ob diese im Uhrzeigersinn oder entgegen dem Uhrzeigersinn verdreht werden muss, und um welchen Winkelbetrag. Durch eine entsprechende Justierung an den Stellscheiben der Justiereinheiten 20 bis 26 kann sodann eine Justierung vorgenommen werden, durch die das Teil 12 in einen korrekten Rundlauf ohne Taumelschlag und ohne Parallelschlag gebracht wird.

Hier sind Rundlaufgenauigkeiten von weniger als 5 µm, etwa in der Größenordnung von 3 µm oder weniger, erreichbar.

Falls gewünscht, kann durch die Verwendung von automatischen Stelleinrichtungen etwa in der Form von Schrittmotoren, wie in Fig. 2 angedeutet, sogar eine automatische Justierung vorgenommen werden.

## Patentansprüche

1. vorrichtung zum zentrierten Spannen von rotierend antreibbaren Teilen (12), mit einer Spann- und Justiereinrichtung (14), die mindestens drei Einheiten (20, 22, 24, 26, 50, 56) zum Spannen und Justieren des Teils (12) aufweist, von denen mindestens zwei (20, 22, 24, 26) Stelleinrichtungen (70) zur definierten Verstellung in Radialrichtung um eine Stellgröße aufweisen, und mit einer Messeinrichtung (28, 30) zur Erfassung von Abweichungen des Teils (12) vom Rundlauf, **dadurch gekennzeichnet, dass** eine Recheneinrichtung (32) vorgesehen ist, und dass die Messeinrichtung (28, 30) zwei axial zueinander versetzte Messaufnehmer (28, 30) zur Abtastung des Teils (12), aufweist, die mit der Recheneinrichtung (32) zur Berechnung der Stellgrößen für einen Rundlauf des Teils (12) ohne Taumelschlag und ohne Parallelschlag gekoppelt sind.

2. Vorrichtung nach Anspruch 1, bei der die Spann- und Justiereinrichtung einen ersten Satz von drei Einheiten (20, 22, 50) zum Spannen und Justieren aufweist, sowie einen zweiten Satz von Einheiten (24, 26, 56) zum Spannen und Justieren aufweist, der gegenüber dem ersten Satz von Einheiten (20, 22, 50) in Axialrichtung versetzt angeordnet ist.

3. Vorrichtung nach Anspruch 2, bei der jeder Satz von Einheiten (20, 22, 50, 24, 26, 56) jeweils zwei mit Stelleinrichtungen (70) versehene Justiereinheiten (20, 22, 24, 26) aufweist, sowie eine Spanneinheit (50, 56) aufweist, wobei die Einheiten in gleichmäßigen Winkelabständen zueinander versetzt angeordnet sind.

4. Vorrichtung nach einem der vorhergehenden Ansprüche, bei der die Justiereinheiten (20, 24, 26, 28) radial verstellbare Stößel (46, 48) aufweisen und die Spanneinheiten (50, 56) radial spannbare Stößel (50, 56) aufweisen.

5. Vorrichtung nach Anspruch 4, bei der die Justiereinheiten mittels Stellschrauben (71) oder eines Stellantriebs radial verstellbare Stößel (46, 48) aufweisen.

6. Vorrichtung nach Anspruch 3, 4 oder 5, bei der jede Stelleinrichtung (70) eine Untersetzung aufweist.

7. Vorrichtung nach Anspruch 6, bei der jede Stelleinrichtung (70) ein Differentialgewinde mit zwei Gewinden (74, 76) mit unterschiedlicher Steigung aufweist, deren Wegdifferenz in einen Stellweg zur radialen Verstellung umgesetzt wird.

8. Vorrichtung nach Anspruch 7, bei der das zweite, vom ersten Gewinde (74) angetriebene Gewinde (76) über einen Stellkonus (80) mit einer Konusaußenfläche (82) auf eine Mehrzahl von Kugeln (86) wirkt, die ferner an einer feststehenden Konusinnenfläche (84) geführt sind, wobei die Kugeln (86) auf den Stößel (46, 46) wirken, um durch eine seitliche Ausweichbewegung entlang der beiden Konusflächen (82, 84) eine weitere Untersetzung einer Verstellbewegung der Stelleinrichtung (70) zu bewirken.

9. Vorrichtung nach Anspruch 8, bei der die Kugeln (86) auf einen Flansch (96) wirken, an dem der Stößel (46, 48) ausgebildet ist.

10. Vorrichtung nach Anspruch 9, bei der der Flansch (96) durch mindestens ein erstes Federelement (88) in Radialrichtung nach außen gegen die Kugeln (86) vorgespannt ist, und wobei ein zweites Federelement (90) vorgesehen ist, um den Stellkonus (80) gegenüber dem Flansch (96) in Radialrichtung nach außen vorzuspannen.

11. Vorrichtung nach einem der Ansprüche 3 bis 10, bei der die Spanneinheiten (50, 56) radial spannbare Stößel (50, 58) aufweisen, die in einer gespannten Stellung durch Spannfedern (54, 60) in Radialrichtung nach innen beaufschlagt sind.

12. Vorrichtung nach einem der vorhergehenden Ansprüche, bei der eine Spanneinrichtung (16) zum Spannen des Teils (12) vorgesehen ist, die mit einem Spannabschnitt (39) in der Spann- und Justiereinrichtung (14) aufgenommen ist.

13. Vorrichtung nach einem der vorhergehenden Ansprüche, bei der die Recheneinrichtung (32) mit einer Anzeige (34) zur optischen und/oder akustischen Anzeige der Stellgrößen gekoppelt ist.

14. Vorrichtung nach einem der vorhergehenden Ansprüche, bei der die Recheneinrichtung (32) mit automatischen Stellmitteln (23, 27) zur automatischen Einstellung der Justiereinheiten (22, 26) auf Rundlauf des gespannten Teils (12) gekoppelt ist.

15. Vorrichtung nach Anspruch 14, bei der die automatischen Stellmittel (23, 27) jeweils einen Schrittmotor für jede Justiereinheit (20, 22, 24, 26) aufweisen.

16. Verfahren zum zentrierten Spannen von rotierend antreibbaren Teilen (12), bei dem das Teil (12) in einer Spann- und Justiereinrichtung (14) mittels mindestens zweier Justiereinheiten (20, 22, 24, 26) zum Spannen und Justieren, sowie mindestens einer Spanneinheit (50, 56) eingespannt wird, dann rotierend angetrieben wird, **dadurch gekennzeichnet, dass** die Abweichungen vom Rundlauf mittels zweier axial gegeneinander versetzter Messaufnehmer (28, 30) gemessen und in Stellgrößen umgerechnet werden, um die die Justiereinheiten (20, 22, 24, 26) verstellt werden müssen, um einen Rundlauf des Teils (12) ohne Taumelschlag und ohne Parallelschlag zu erreichen.

17. verfahren nach Anspruch 16, bei dem das Teil in einer Spann- und Justiereinrichtung (14) mit zwei Sätzen von jeweils zwei Justiereinheiten (20, 22, 24, 26) und einer Spanneinheit (50, 56) eingespannt wird, die axial gegeneinander versetzt angeordnet sind, und bei dem aus den ermittelten Messdaten Stellgrößen errechnet werden, um die die vier Justiereinheiten (20, 22, 24, 26) zur Erreichung eines Rundlaufs ohne Taumelschlag und ohne Parallelschlag verstellt werden.

18. Verfahren nach Anspruch 16 oder 17, bei dem die errechneten Stellgrößen Stellantrieben (23, 27) zugeführt werden, mittels derer die Justiereinheiten (20, 22, 24, 26) zur Erreichung eines Rundlaufs automatisch verstellt werden.

## Claims

1. A device for the concentric chucking of parts (12) that can be set into revolving operation, comprising a chucking and adjusting fixture (14) comprising at least three units (20, 22, 24, 26, 50, 56) for clamping and adjusting the part (12), at least two (20, 22, 24, 26) of which comprise actuator means (70) allowing defined adjustment in radial direction by a manipulated variable, further comprising a measuring device (28, 30) adapted to detect deviations from concentricity of the part (12), **characterized in that** a computing device (32) is provided and that the measuring device (28, 30) comprises two measuring pick-ups (28, 30), which are offset one relative to the other in axial direction, for sampling the part (12), the pick-ups being coupled to the computing device (32) for calculating the manipulated variables that will ensure concentricity of the part (12) without any couple unbalance or parallel unbalance.

2. The device as defined in Claim 1, wherein the chucking and adjusting fixture comprises a first set of three clamping and adjusting units (20, 22, 50), as well as a second set of clamping and adjusting units (24, 26, 56) which is offset in axial direction relative to the first set of units (20, 22, 50).

3. The device as defined in Claim 2, wherein each set of units (20, 22, 50, 24, 26, 56) comprises two actuator means (70), each provided with adjusting devices (20, 22, 24, 26), and one clamping unit (50, 56), the units being provided at equal angular spacings one from the other.

4. The device as defined in any of the preceding claims, wherein the adjusting units (20, 24, 26, 28) preferably comprise radially adjustable plungers (46, 48) and the clamping units (50, 56) comprise plungers (50, 56) that can be clamped radially.

5. The device as defined in Claim 4, wherein the adjusting units comprise plungers (46, 48) that can be radially adjusted by means of setscrews (71) or a servo-drive.

6. The device as defined in Claim 3, 4 or 5, wherein each of the actuator means (70) is provided with a step-down system.

7. The device as defined in Claim 6, wherein each actuator means (70) comprises a differential thread with two threads (74, 76) of different pitches, the difference in displacement being converted to an actuator travel value for radial adjustment.

8. The device as defined in Claim 7, wherein the second thread (76), being driven by the first thread (74), acts with a conical outer surface (82) via an adjusting cone (80) upon a plurality of balls (86) which are further guided on a stationary inner surface (84) of the cone, the balls (86) acting on the plunger (46, 48) for effecting further stepping-down of a setting movement of the actuator means (70) by a lateral yielding movement along the two cone surfaces (82, 84).

9. The device as defined in Claim 8, wherein the balls (86) act on a flange (96) on which the plunger (46, 48) is formed.

10. The device as defined in Claim 9, wherein the flange (96) is biased in radially outward direction relative to the balls (86) by at least one spring element (88), there being further provided at least one second spring element (90) which acts to bias the adjusting cone (80) relative to the flange (96) in radially outward direction.

11. The device as defined in any of Claims 3 to 10, wherein the clamping units (50, 56) comprise plungers (50, 58) that can be tensioned in radial direction, the plungers in their tensioned position being urged inwardly in radial direction by tension springs (54, 60).

12. The device as defined in any of the preceding claims, wherein a chucking device (16) is provided for chucking the part (12), the chucking device having a clamping section (39) that is received in the chucking and adjusting fixture (14).

13. The device as defined in any of the preceding claims, wherein the computing device (32) is provided with a display (34) for visual and/or acoustic indication of the manipulated variables.

14. The device as defined in any of the preceding claims, wherein the computing device (32) is coupled to automatic actuator means (23, 27) for automatically adjusting the adjusting units (22, 26) for concentricity of the chucked part (12).

15. The device as defined in Claim 14, wherein the automatic actuator means (23, 27) each comprise a stepping motor for each adjusting unit (20, 22, 24, 26).

16. A method for the concentric chucking of parts (12) that can be set into revolving operation, wherein the part (12) is chucked in a chucking and adjusting fixture (14) by at least two adjusting units (20, 22, 24, 26) adapted to chuck and adjust the part, and at least one clamping unit (50, 56), whereafter the part is set into revolving operation, **characterized in that** the deviations from concentricity are measured and converted by means of two measuring pick-ups (28, 30), that are offset one relative to the other in axial direction, to manipulated variables by which the adjusting units (20, 22, 24, 26) must be adjusted to achieve concentricity of the part (12) free from any couple unbalances and parallel unbalances.

17. The method as defined in Claim 16, wherein the part is chucked in a chucking and adjusting fixture (14) by means of two sets of units each having two adjusting units (20, 22, 24, 26) and one clamping unit (50, 56), that are offset one relative to the other in axial direction, and wherein manipulated variables are computed from the measured values so determined by which the four adjusting units (20, 22, 24, 26) are adjusted with a view to achieving concentricity free from couple unbalances and parallel unbalances.

18. The method as defined in Claim 16 or Claim 17, wherein the computed manipulated variables are supplied to servo-drives (23, 27) by means of which the adjusting units (20, 22, 24, 26) are automatically adjusted with a view to achieving concentricity.

## Revendications

1. Dispositif pour le serrage centré de pièces (12) pouvant être entraînées par rotation, comprenant un dispositif de serrage et d'ajustage (14), qui présente au moins trois unités (20, 22, 24, 26, 50, 56) pour le serrage et l'ajustage de la pièce (12), dont au moins deux (20, 22, 24, 26) présentent des dispositifs de positionnement (70) pour le déplacement défini dans le sens radial d'une grandeur de positionnement et avec un dispositif de mesure (28, 30) pour la détection d'écarts de la pièce (12) par rapport à la concentricité, **caractérisé en qu'**un dispositif de calcul (32) est prévu, et en ce que le dispositif de mesure (28, 30) présente deux enregistreurs de mesure (28, 30) décalés axialement l'un par rapport à l'autre pour le balayage de la pièce (12), qui sont couplés avec le dispositif de calcul (32) pour le calcul des grandeurs de positionnement pour une concentricité de la pièce (12) sans excentricité par nutation et sans excentricité parallèle.

2. Dispositif selon la revendication 1, sur lequel le dispositif de serrage et d'ajustage présente un premier ensemble de trois unités (20, 22, 50) pour le serrage et l'ajustage, et présente un second ensemble d'unités (24, 26, 56) pour le serrage et l'ajustage, qui est disposé de façon décalée dans la direction axiale par rapport au premier ensemble d'unités (20, 22, 50).

3. Dispositif selon la revendication 2, sur lequel chaque ensemble d'unités (20, 22, 50, 24, 26, 56) présente respectivement deux unités d'ajustage (20, 22, 24, 26) dotées chacune de dispositifs de positionnement (70), et présente une unité de serrage (50, 56), les unités étant disposées de façon décalée les unes par rapport aux autres à des intervalles d'angle réguliers.

4. Dispositif selon l'une quelconque des revendications précédentes, sur lequel les unités d'ajustage (20, 24, 26, 28) présentent des coulisseaux (46, 48) réglables radialement et les unités de serrage (50, 56) présentent des coulisseaux (50, 56) pouvant être tendus radialement.

5. Dispositif selon la revendication 4, sur lequel les unités d'ajustage présentent des coulisseaux (46, 48) pouvant être réglés radialement au moyen de vis de positionnement (71) ou d'un servomoteur.

6. Dispositif selon la revendication 3, 4 ou 5, sur lequel chaque dispositif de positionnement (70) présente une démultiplication.

7. Dispositif selon la revendication 6, sur lequel chaque dispositif de positionnement (70) présente un filetage différentiel avec deux filetages (74, 76) avec un pas différent, dont la différence de course est convertie en une course de positionnement pour le déplacement radial.

8. Dispositif selon la revendication 7, sur lequel le second filetage (76) entraîné par le premier filetage (74) agit au moyen d'un cône de réglage (80) avec une surface extérieure de cône (82) sur une pluralité de sphères (86), qui sont guidées également sur une surface intérieure de cône (84), les sphères (86) agissant sur le coulisseau (46, 46), afin d'entraîner par un mouvement d'évidement latéral le long des deux surfaces de cône (82, 84) une autre démultiplication d'un mouvement de déplacement du dispositif de positionnement (70).

9. Dispositif selon la revendication 8, sur lequel les sphères (86) agissent sur une bride (96), sur laquelle le coulisseau (46, 48) est réalisé.

10. Dispositif selon la revendication 9, sur lequel la bride (96) est pré-tendue par au moins un premier élément de ressort (88) dans le sens radial à l'extérieur contre les sphères (86), et un autre élément de ressort (90) étant prévu pour pré-tendre le cône de réglage (80) par rapport à la bride (96) dans le sens radial vers l'extérieur.

11. Dispositif selon l'une quelconque des revendications 3 à 10, sur lequel les unités de serrage (50, 56) présentent des coulisseaux (50, 58) pouvant être tendus radialement, qui sont sollicités dans une position tendue par des ressorts de serrage (54, 60) dans le sens radial vers l'intérieur.

12. Dispositif selon l'une quelconque des revendications précédentes, sur lequel un dispositif de serrage (16) est prévu pour le serrage de la pièce (12), qui est réceptionné avec une partie de serrage (39) dans le dispositif de serrage et d'ajustage (14).

13. Dispositif selon l'une quelconque des revendications précédentes, sur lequel le dispositif de calcul (32) est couplé avec un affichage (34) pour l'affichage optique et/ou acoustique des grandeurs de réglage.

14. Dispositif selon l'une quelconque des revendications précédentes, sur lequel le dispositif de calcul (32) est couplé avec des moyens de positionnement (23, 27) automatiques pour le réglage automatique des unités d'ajustage (22, 26) sur la concentricité de la pièce (12) tendue.

15. Dispositif selon la revendication 14, sur lequel les moyens de positionnement (23, 27) automatiques présentent chacun un moteur pas à pas pour chaque unité d'ajustage (20, 22, 24, 26).

16. Procédé pour le serrage centré de pièces (12) pouvant être entraînées par rotation, dans lequel la pièce (12) est serrée dans un dispositif de serrage et d'ajustage (14) au moyen d'au moins deux unités d'ajustage (20, 22, 24, 26) pour le serrage et l'ajustage, et au moins une unité de serrage (50, 56), est entraînée ensuite par rotation, **caractérisé en ce que** les écarts par rapport à la concentricité sont mesurés au moyen de deux enregistreurs de mesure (28, 30) décalés axialement l'un par rapport à l'autre et sont convertis en grandeurs de positionnement, desquelles les unités d'ajustage (20, 22, 24, 26) doivent être déplacées, afin d'obtenir une concentricité de la pièce (12) sans excentricité par mutation et sans excentricité parallèle.

17. Procédé selon la revendication 16, dans lequel la pièce est serrée dans un dispositif de serrage et d'ajustage (14) avec deux ensembles de respectivement deux unités d'ajustage (20, 22, 24, 26) et une unité de serrage (50, 56), qui sont disposés décalés axialement l'un par rapport à l'autre, et dans lequel on calcule à partir des données de mesure déterminées des grandeurs de positionnement, desquelles les quatre unités d'ajustage (20, 22, 24, 26) sont déplacées pour obtenir une concentricité sans excentricité par nutation et sans excentricité parallèle.

18. Procédé selon la revendication 16 ou 17, dans lequel les grandeurs de positionnement calculées sont amenées à des servomoteurs (23, 27), au moyen desquels les unités d'ajustage (20, 22, 24, 26) sont déplacées automatiquement pour obtenir une concentricité.
